# EUROPEAN PATENT SPECIFICATION

(11) **EP 3 117 696 B1**
(45) Date of publication and mention of the grant of the patent: **06.05.2020**
(21) Application number: 16179962.2
(22) Date of filing: 18.07.2016
(51) Int. Cl.: A01D 41/14

(54) **ARTICULATED CUTTING HEADER FOR AGRICULTURAL MACHINES**
VERSCHENKBARER MÄHVORSATZ FÜR EINE LANDWIRTSCHAFTLICHE MASCHINE
TETE DE COUPE ARTICULEE POUR MACHINES AGRICOLES

(30) Priority: 17.07.2015 IT UB20152734
(43) Date of publication of application: 18.01.2017
(73) Proprietor: Elia Giorgio Ditta Ind., 10040 Volvera (TO) (IT)
(72) Inventor: ELIA, Giorgio, 10045 PIOSSASCO (TO) (IT)
(74) Representative: Robba, Pierpaolo

(56) References cited:
- EP-A1- 1 287 732
- EP-A2- 0 827 684
- US-A- 4 409 780
- US-A- 4 715 172

## Description

### Technical Field

The present invention relates to an articulated cut header for agricultural machines.

More particularly, the present invention relates to a cut header articulated so as to be foldable when the agricultural machine is not in its working configuration.

### Prior Art

Cut headers connected to appropriate power take-offs of agricultural machines, through which motion is transmitted to said headers, are known in the state of the art. Cut headers are used for cutting fodders and the agricultural machines to which such headers are connected are often referred to as shredders or choppers.

The cut header joined to the respective agricultural machine constitutes, from an operational point of view, a single self-propelled working machine, which reaches such a remarkable size that it may limit, if not prevent, normal road circulation.

Cut headers are also known which are capable of taking a folded position, when the agricultural machine is not in its working configuration, by means of single hinges and through steps that require decoupling of motion transmitting members (decoupling of joints, opening of couplings, etc.).

For instance, document US 4715172 describes an agricultural machine comprising a cut header consisting of two sections having respective longitudinal axes. The two header sections can effect two pivotal movements. A first pivotal movement takes place about an axis vertical relative to the ground plane on which the agricultural machine operates and results in the displacement of the header sections located at both sides of the agricultural machine, with the longitudinal axes of the two header sections being parallel to the forward direction of the agricultural machine. A second pivotal movement, subsequent to the first one, takes place about an axis parallel to the forward direction of the vehicle and therefore parallel to the longitudinal axes of both header sections arranged at the sides of the agricultural machine.

Document EP 0827684 A2 describes an agricultural machine comprising a cut header consisting of two sections which are adjustable for road travel. When the two sections are adjusted for road travel, they are placed on the sides of the agricultural machine.

The use of cut headers hinged in known manner does not allow to sufficiently reduce their overall size when said headers are in their folded position and can hinder the view of drivers of agricultural machines to which such headers are connected. This makes road circulation of such agricultural machines non-compliant with regulations or otherwise problematic.

The known articulated cut headers also involve the following problems:
- need to provide a significant number of connecting elements (joints, couplings, etc.) in order to disconnect and reconnect the headers to the motion transmitting members, with consequent high manufacturing costs and limited reliability ;
- need to perform complicated operations of connection and disconnection between the headers and the motion transmitting members, because of the use of such connecting elements;
- need to keep the above connecting elements open when the headers are in their folded position, with consequent exposure of the same to dirt.

The main object of the invention is to overcome the prior art drawbacks by providing a cut header which, in its folded position, has small overall size that does not hinder the driver's view and meets the law requirements regarding road circulation of agricultural machines.

A further object of the present invention is to provide a cut header that can be folded by means of simple mechanisms and easy operations in order to reduce manufacturing and maintenance costs.

These and other objects of the invention are achieved with an articulated cut header for agricultural machines as claimed in the appended claims forming an integral part of the present description.

### Summary of the Invention

The articulated cut header for agricultural machines comprises two header sections having respective longitudinal axes and comprising respective hinges arranged to allow each of said header sections to effect a pivotal movement about first, mutually parallel pivot axes. The header further comprises at least a further hinge arranged to allow the header sections to effect a second pivotal movement about a second pivot axis substantially perpendicular to the first pivot axes.

The first pivot axes and the second pivot axis are orthogonal relative to the direction that the longitudinal axes of the header sections have at the beginning of the first and second pivotal movements, respectively.

In a preferred embodiment of the articulated cut header, the first pivot axes are substantially parallel to a longitudinal axis of the agricultural machines and the second pivot axis is substantially parallel to wheel axes of the agricultural machine.

By virtue of the two pivotal movements of the cut header sections, said sections are rotated from a starting working position to an intermediate position (first pivotal movement), in which the header sections have vertical longitudinal axes, and from the intermediate position to a final folded position (second pivotal movement), in which the header sections have horizontal longitudinal axes. In addition, in the final folded position the header sections are arranged in front of the agricultural machine, have longitudinal axes substantially parallel to a longitudinal axis of the agricultural machine and are contained within a transverse size of the agricultural machine.

### Brief Description of the Drawings

Further features and advantages of the present invention will be more apparent from a detailed description of a preferred embodiment, given by way of non-limiting example, with reference to the annexed drawings, in which:
Figure 1 is a side view of an agricultural machine comprising the articulated cut header according to the invention, in its working configuration;
Figure 1a is an enlarged view of a detail of the side view of Figure 1;
Figure 2 is a front view of the agricultural machine comprising the articulated cut header of Figure 1;
Figure 2a is an enlarged view of a detail of the front view of Figure 2;
Figure 3 is a top plan view of the agricultural machine comprising the cut header of Figure 1;
Figure 4 is a front view of the agricultural machine comprising the cut header of Figure 1, in which one of the header sections is in its intermediate position;
Figure 4a is an enlarged view of a detail of the front view of Figure 4;
Figure 5 is a side view of an agricultural machine comprising the cut header of Figure 1, in which the cut header is in its final folded position;
Figure 6 is a top plan view of an agricultural machine comprising the cut header of Figure 1, in which the cut header is in its final folded position.

### Description of Preferred Embodiments of the Invention

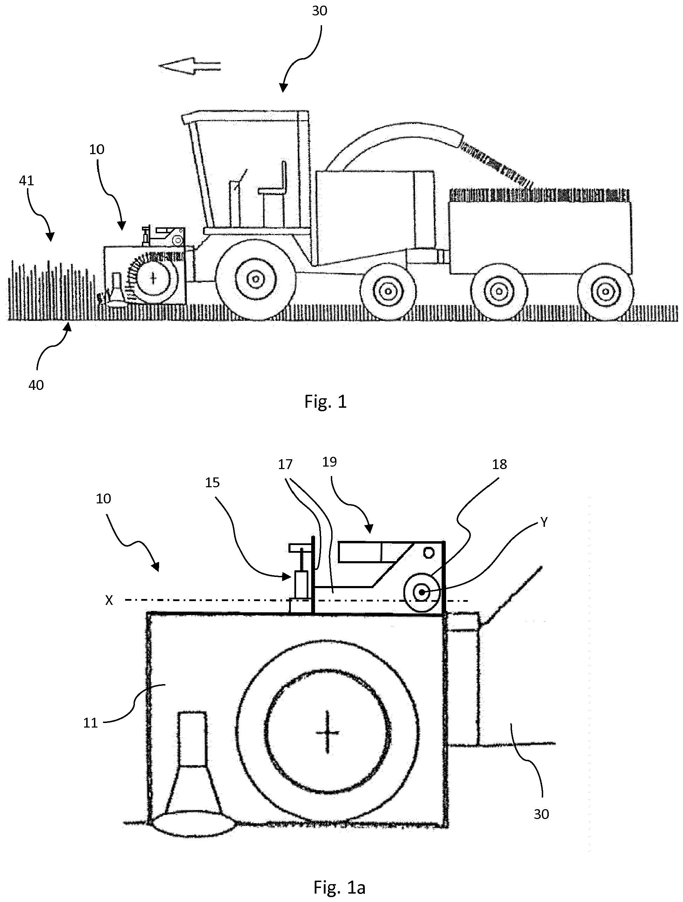

Referring to Figure 1, this schematically shows an agricultural or working machine 30, referred to as shredder or chopper, to which an articulated cut header 10 is connected, said cut header preferably comprising a first header section 11 and a second header section 12, said header sections being substantially identical to each other, and a connecting element 17.

The agricultural machine 30 has a longitudinal axis A and wheels defining wheel axes R that are perpendicular to the longitudinal axis A.

The arrow depicted above the agricultural machine 30 represents the forward direction of the machine, parallel to the ground 40 and to the longitudinal axis A of the agricultural machine

According to a preferred embodiment, the agricultural machine 30 is joined to the connecting element 17 of the cut header 10 by means of a connecting hinge 18, of known type, capable of allowing pivotal movements of the connecting element 17 relative to the agricultural machine 30 about a pivot axis Y.

The header sections 11, 12 comprise respective side hinges 13, 14 arranged to join the header sections 11 or 12 to the connecting element 17. Preferably, the side hinges 13, 14 are capable of allowing pivotal movements of the respective header sections 11, 12 relative to the connecting element 17 about respective pivot axes X.

Preferably, the pivot axis Y is substantially perpendicular to the pivot axes X.

The cut header 10 further comprises actuating members configured for actuating the aforesaid pivotal movements. Preferably, said actuating members comprise a front hydraulic piston 19, hinged in known manner to the agricultural machine 30 and to the connecting element 17, and a first and second side hydraulic pistons 15, 16, hinged in known manner to the connecting element 17 and to the respective first and second header sections 11 , 12. The front hydraulic piston 19 is adapted to apply the forces necessary to allow the pivotal movement of the cut header 10 about the pivot axis Y, whereas the side hydraulic pistons 15, 16 are adapted to apply the forces necessary to allow the pivotal movement of the respective header sections 11, 12 about the respective pivot axes X.

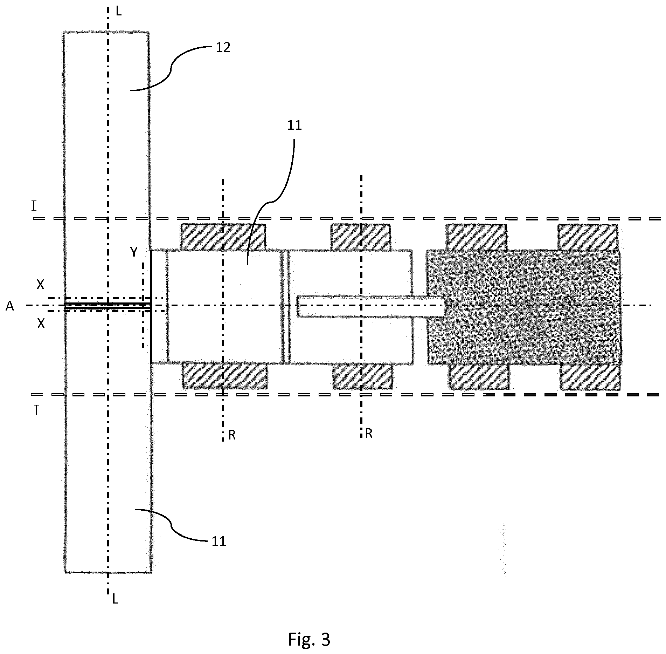

In Figures 1, 2 and 3, the agricultural machine 30 is shown in its working configuration, i.e. with the first and second header sections 11, 12 positioned with their respective longitudinal axes L substantially perpendicular to the forward direction of the agricultural machine 30 and substantially parallel to the ground 40, so as to allow the operation of cutting fodders 41 or the like. In the working configuration, the cut header 10 has, with respect to the forward direction of the agricultural machine 30, a maximum size exceeding the transverse size of the machine itself, delimited by the planes I in Figure 3.

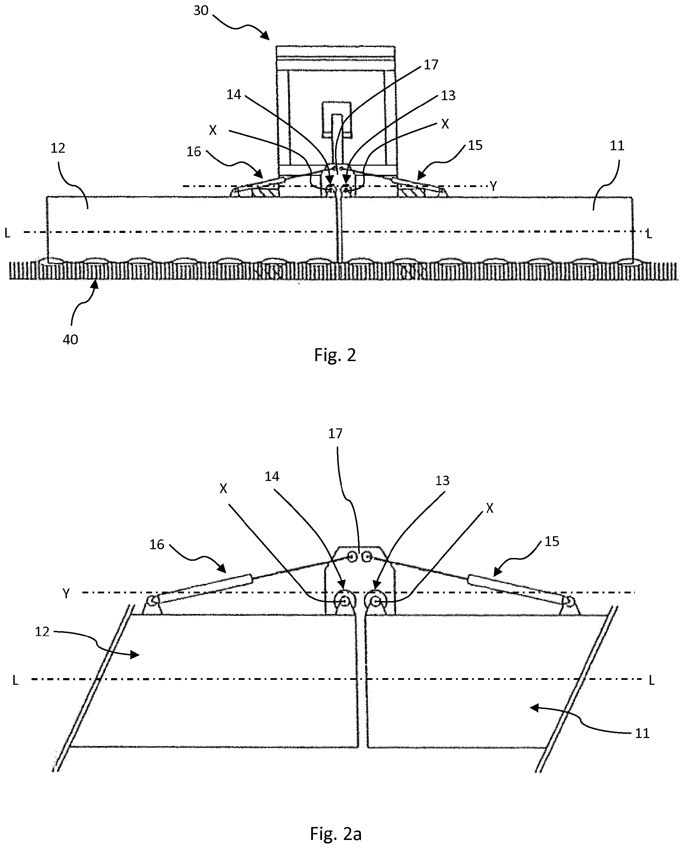

In particular, Figures 1, 2 and 3 show a side, front and top plan views, respectively (without hinges and pistons, for ease of representation), of the agricultural machine 30 and corresponding cut header 10, whereas the Figures 1a and 2a are enlarged views of details of Figures 1 and 2 showing in greater detail the connecting hinge 18, the side hinges 13, 14, the front hydraulic piston 19, the side hydraulic pistons 15, 16 and the pivot axes X e Y.

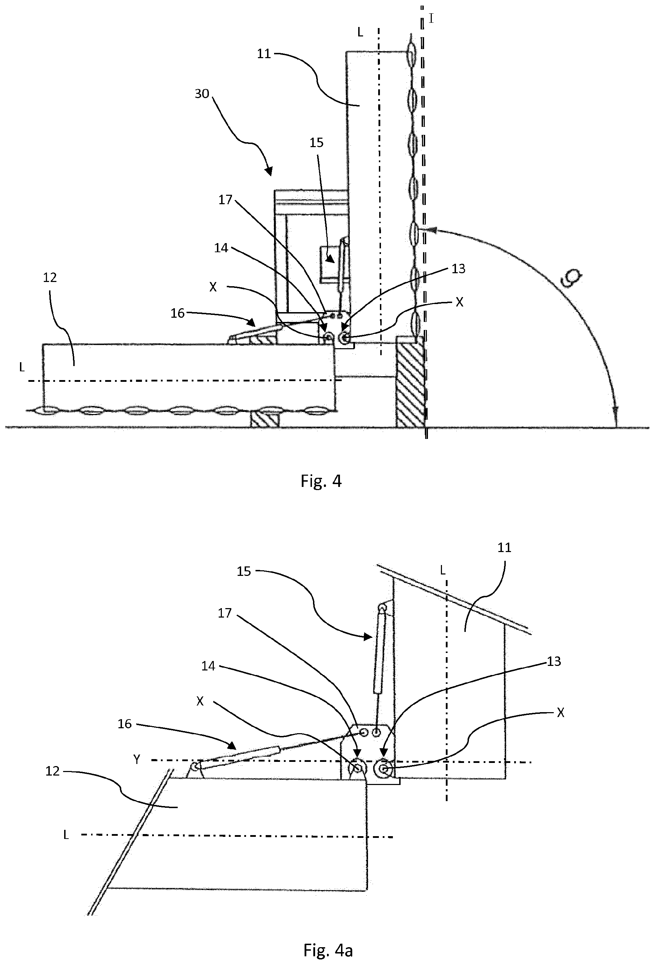

Referring to Figures 4, 5 and 6 (in which hinges and pistons have been omitted for ease of representation), according to the preferred embodiment, the side hinges 13, 14 and the connecting hinge 18 allow pivotal movements of the header sections 11, 12 about pivot axes X and Y which are substantially perpendicular to the direction that the longitudinal axes L of the header sections 11, 12 have at the beginning of such pivotal movements.

More particularly, the side hinges 13, 14 are adapted to allow a first pivotal movement g of the header sections 11, 12 about the pivot axes X, substantially parallel to the longitudinal axis A of the agricultural machine 30. According to what has been said above, the pivot axes X are substantially perpendicular to the direction that the longitudinal axes L of the header sections 11, 12 have at the beginning of said first pivotal movement g, i.e. when the header is in its working configuration. Such first pivotal movement is shown in Figures 4 and 4a with reference to the first header section 11.

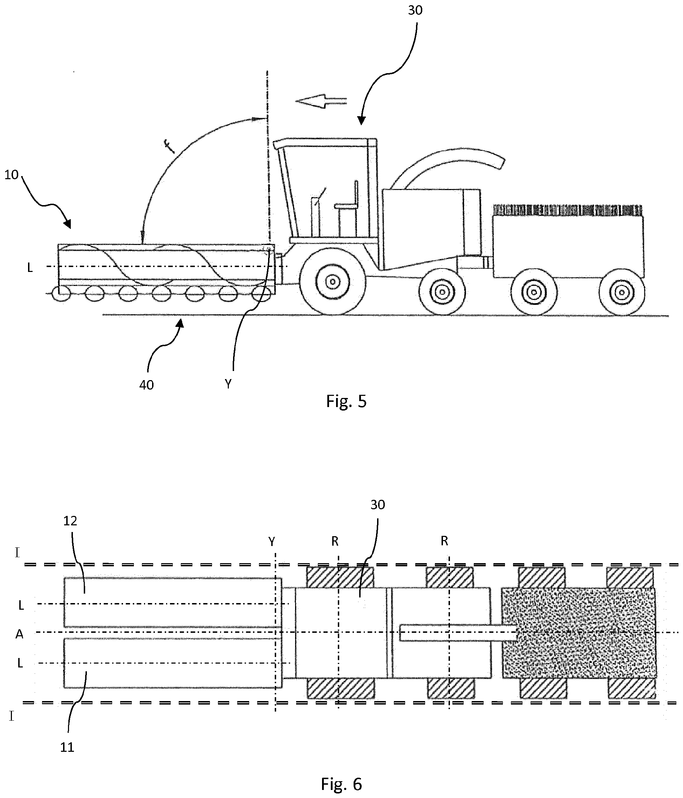

The connecting hinge 18, instead, is adapted to allow a second pivotal movement f of the header sections 11, 12 (and of the connecting element 17), subsequent to the first movement g and effected about the pivot axis Y, substantially parallel to the wheel axes R. According to what has been said above, the pivot axis Y is substantially perpendicular to the direction that the longitudinal axes L of the header sections 11, 12 have at the beginning of the second pivotal movement f, i.e. at the end of the first pivotal movement g. Such second pivotal movement is shown in Figure 5.

Following the first pivotal movement g, the header sections 11, 12 are situated in an intermediate position in which the longitudinal axes L of the header sections 11, 12 are in a vertical position relative to the ground, as shown in Figure 4 with reference to the first header section 11. In particular, in this intermediate position, the header sections 11, 12 are arranged in front of the agricultural machine 30 (with respect to the forward direction of the machine), preferably without projecting relative to a transverse size of the agricultural machine 30, delimited by the planes I, as shown in Figure 4 with reference to the first header section 11.

Following the second pivotal movement f, the header sections 11, 12 are situated in a final position in which the longitudinal axes L of the header sections 11, 12 are in a horizontal position relative to the ground S and substantially parallel to the longitudinal axis A of the agricultural machine 30. In particular, in this final position, the header sections 11, 12 are arranged in front of the agricultural machine 30 (with respect to the forward direction of the machine), preferably without projecting relative to a transverse size of the agricultural machine 30, delimited by the planes I, as shown in Figure 6. When the header sections 11, 12 are in their final position, the articulated cut header 10 is in its folded configuration.

The materials that can be used for manufacturing the hinges are, for example, ordinary steels for electro-welded structures, stainless steels or metal alloys in general. There is no limitation, instead, as to the choice of the material of which the articulated cut header 10 is made.

In addition, according to the preferred embodiment, the articulated cut header 10 is connected to motion transmitting members (i.e. members transmitting a working motion to the header, for performing functions such as cutting and harvesting of fodders) so that, for allowing the aforesaid pivotal movements, there is no need to decouple said transmission components from the cut header. This is made possible, for example, by universal joints of known type.

According to a further embodiment, the articulated cut header comprises a first and second connecting elements, joined to the agricultural machine as well as to the first and second header sections, respectively. Similarly to what has been described with reference to the preferred embodiment, each connecting element is joined to the agricultural machine by means of a corresponding connecting hinge, arranged to allow the pivotal movement of the connecting element, and thus of the respective header sections, about the axis Y. Such pivotal movement is made possible by a first and second front pistons, said front pistons being connected to the agricultural machine as well as to the first and second connecting elements, respectively. In this embodiment, as two front pistons are provided, one for each header section, the pivotal movements about the axis Y can be carried out independently for each header section, and the same happens with the pivotal movements about the axes X, which are carried out in the same way as described with reference to the preferred embodiment.

The operation of the articulated cut header 10 according to the invention can be summarized as follows.

In a first step (working step), the articulated cut header 10 is in its working configuration, suitable for operations of cutting fodders 41 or the like (Figures 1, 2 and 3).

In a first folding step, the header sections 11, 12 are pivoted from their working position to their intermediate position, by means of a first pivotal movement g about the axes X. The first and second header sections 11, 12 can be pivoted independently of each other.

In a second folding step, the header sections 11, 12 (together with the connecting element 17) are pivoted from their intermediate position to their final position, by means of a second pivotal movement f about the axis Y. When the header sections 11, 12 are in their final position, the articulated cut header 10 assumes the folded configuration.

The articulated cut header 10 according to the present invention, by virtue of the fact that it can assume a folded configuration with so a minimum size that it does not extend beyond the transverse size of the respective agricultural machine 30, is adapted to allow road transfers of the agricultural machine and especially suitable when the agricultural machine is kept in a warehouse.

Advantageously, the cut header 10 according to the present invention can be used in total safety by the driver of the agricultural machine during the folding steps of the machine.

A further advantage lies in the possibility of pivoting the header sections of the cut header without the need for mechanical decoupling between the cut header 10 and the transmission components.

The articulated cut header 10 according to the present invention does not require special skills for the installation thereof, because the connections between the articulated cut header 10 and the respective agricultural machine 30 are of known type. In addition, a possible further operation of detaching the articulated cut header can also be effected in a simple way.

It will also be evident to the person skilled in the art that the detailed description provided above has been given by way of non-limiting example and that numerous modifications and variations are possible without departing from the scope of protection defined in the accompanying claims.

## Claims

1. Articulated cut header for agricultural machines (30) having a machine longitudinal axis (A) and wheel axes (R),
said header (10) comprising a first header section (11) and a second header section (12) having respective header section longitudinal axes (L),
each of said first and second header sections being provided with a respective side hinge (13, 14), each of said side hinges being adapted to allow a first pivotal movement (g) of the respective header section (11, 12),
said header (10) further comprising at least one connecting hinge (18) adapted to allow a second pivotal movement (f) of the header sections (11, 12),
said first pivotal movement (g) being effected about first pivot axes (X) substantially parallel to each other, and said second pivotal movement (f) being effected about a second pivot axis (Y) substantially perpendicular to said first pivot axes (X),
said first pivot axes (X) and said second pivot axis (Y) being substantially perpendicular to the direction that the longitudinal axes (L) of each of said header sections (11, 12) have at the beginning of said first pivotal movement (g) and said second pivotal movement (f), respectively
wherein said header (10) further comprises one connecting element (17) to which said header sections (11, 12) are joined by means of said side hinges (13, 14), said one connecting element (17) being attachable to the front of the agricultural machine (30) by means of said at least one connecting hinge (18),
wherein said first pivotal movement (g) and said second pivotal movement (f) are adapted to arrange the header sections (11, 12) in front of the agricultural machine (30) and in such a way that said header sections (11, 12) are contained within a transverse size of the agricultural machine (30),
**characterized in that** said machine longitudinal axis (A) is parallel to ground (40) and said first pivotal movement (g) and said second pivotal movement (f) are adapted to arrange the header sections (11, 12) in a position in which their longitudinal axes (L) are substantially parallel to said machine longitudinal axis (A).

2. Articulated cut header according to claim 1, wherein said first pivot axes (X) are substantially parallel to the longitudinal axis (A) of the agricultural machine (30) and wherein said second pivot axis (Y) is substantially parallel to the wheel axes (R) of the agricultural machine (30).

3. Articulated cut header according to any of the preceding claims, wherein said first pivotal movement (g) and said second pivotal movement (f) are actuatable by means of actuating members (15, 16, 19) controlled by the agricultural machine (30).

4. Articulated cut header according to claim 3, wherein said actuating members comprise:
- a first side piston (15), connected between the first header section (11) and the connecting element (17) and configured to actuate the first pivotal movement (g) of the first header portion (11);
- a second side piston (16), connected between the second header section (12) and the connecting element (17) and configured to actuate the first rotational movement (g) of the second header section (12);
- at least one front piston (19), connected between said one connecting element (17) and the agricultural machine (30), said at least one front piston (19) being configured to actuate the second pivotal movement (f) of the first and second header sections (11, 12).

5. Articulated cut header according to any of the preceding claims, wherein said first pivotal movement (g) and said second pivotal movement (f) are actuatable without mechanical decoupling between motion transmitting members and the cut header (10).

6. Method of folding an articulated cut header (10) for an agricultural machine (30), said agricultural machine (30) having a machine longitudinal axis (A) which is parallel to ground (40), said header comprising a first header section (11) and a second header section (12) having respective header section longitudinal axes (L) and one connecting element (17) to which said header sections (11, 12) are joined by means of respective side hinges (13, 14), said one connecting element (17) being attachable to the front of the agricultural machine (30),
said method comprising the steps of:
- providing first pivotal movements (g) of the header sections (11, 12) for pivoting the header sections from a starting working position to an intermediate position, said first pivotal movements (g) being effected about the first pivot axes (X) substantially perpendicular to the direction that the longitudinal axes (L) of the header sections (11, 12) have in the starting working position;
- providing a second pivotal movement (f) of the header sections (11, 12) for pivoting the header sections from their intermediate position to a final position, said second pivotal movement (f) being effected about a second pivot axis (Y) substantially perpendicular to the first pivot axes (X) and substantially perpendicular to the direction that the longitudinal axes (L) of the header sections (11, 12) have in the intermediate position,
wherein said first pivotal movement (g) and said second pivotal movement (f) are adapted to arrange the header sections (11, 12) in front of the agricultural machine (30) and in such a way that said header sections (11, 12) are contained within a transverse size of the agricultural machine (30), and
wherein said first pivotal movement (g) and said second pivotal movement (f) are adapted to arrange the header sections (11, 12) in a position in which their longitudinal axes (L) are substantially parallel to said machine longitudinal axis (A).

## Patentansprüche

1. Verschwenkbarer Mähvorsatz für landwirtschaftliche Maschinen (30), die eine Maschinenlängsachse (A) und Radachsen (R) haben,
wobei der Vorsatz (10) einen ersten Vorsatzabschnitt (11) und einen zweiten Vorsatzabschnitt (12) aufweist, die jeweils entsprechende Vorsatzabschnittlängsachsen (L) haben,
sowohl der erste als auch der zweite Vorsatzabschnitt jeweils mit einem entsprechenden Seitengelenk (13, 14) versehen sind, wobei jedes der Seitengelenke dafür ausgelegt ist, eine erste Schwenkbewegung (g) des entsprechenden Vorsatzabschnitts (11, 12) zu ermöglichen,
der Vorsatz (10) zudem wenigstens ein Verbindungsgelenk (18) aufweist, das dafür ausgelegt ist, eine zweite Schwenkbewegung (F) der Vorsatzabschnitte (11, 12) zu ermöglichen,
die erste Schwenkbewegung (g) um erste Schwenkachsen (X) durchgeführt wird, die im Wesentlichen parallel zueinander verlaufen, und die zweite Schwenkbewegung (f) um eine zweite Schwenkachse (Y) durchgeführt wird, die im Wesentlichen senkrecht zu den ersten Schwenkachsen (X) verläuft,
die ersten Schwenkachsen (X) und die zweite Schwenkachse (Y) im Wesentlichen senkrecht zu der Richtung der Längsachsen (L) jedes der beiden Vorsatzabschnitte (11, 12) verläuft, welche diese bei Beginn der ersten Schwenkbewegung (g) und der zweiten Schwenkbewegung (f) haben,
wobei der Vorsatz (10) zudem ein Verbindungselement (17) aufweist, mit dem die Vorsatzabschnitte (11, 12) mittels der Seitengelenke (13, 14) verbunden sind, wobei das eine Verbindungselement (17) mittels des wenigstens einen Verbindungsgelenks (18) an der Vorderseite der landwirtschaftlichen Maschine (30) befestigt werden kann,
wobei die erste Schwenkbewegung (g) und die zweite Schwenkbewegung (f) dafür ausgelegt sind, die Vorsatzabschnitte (11, 12) vor die Landwirtschaftsmaschine (30) zu bringen und zwar so, dass die Vorsatzabschnitte (11, 12) innerhalb einer querverlaufenden Abmessung der Landwirtschaftsmaschine (30) enthalten sind,
**dadurch gekennzeichnet, dass** die Maschinenlängsachse (A) parallel zu dem Boden (40) ist und die erste Schwenkbewegung (g) sowie die zweite Schwenkbewegung (f) dafür ausgelegt sind, die Vorsatzabschnitte (11, 12) in eine Position zu bringen, in der deren Längsachse (11) im Wesentlichen parallel zu der Maschinenlängsachse (A) sind.

2. Verschwenkbarer Mähvorsatz nach Anspruch 1, wobei die ersten Schwenkachsen (X) im Wesentlichen parallel zu der Längsachse (A) der landwirtschaftlichen Maschine (30) sind und wobei die zweite Schwenkachse (Y) im Wesentlichen parallel zu den Radachsen (R) der landwirtschaftlichen Maschine (30) ist.

3. Verschwenkbarer Mähvorsatz nach einem der vorstehenden Ansprüche, wobei die erste Schwenkbewegung (g) und die zweite Schwenkbewegung (f) mittels Stellgliedern (15, 16, 19) auslösbar sind, die von der landwirtschaftlichen Maschine (30) gesteuert werden.

4. Verschwenkbarer Mähvorsatz nach Anspruch 3, wobei die Stellglieder aufweisen:
- einen erster Seitenkolben (15), der zwischen dem ersten Vorsatzabschnitt (11) und dem Verbindungselement (17) angeschlossen und dafür ausgelegt ist, die erste Schwenkbewegung (g) des ersten Vorsatzabschnitts (11) zu bewirken,
- einen zweiten Seitenkolben (16), der zwischen dem zweiten Vorsatzabschnitt (12) und dem Verbindungselement (17) angeschlossen und dafür ausgelegt ist, die erste Schwenkbewegung (g) des zweiten Vorsatzabschnitts (12) zu bewirken,
- wenigstens ein Vorderkolben (19), der zwischen dem wenigstens einen Verbindungselement (17) und der landwirtschaftlichen Maschine (30) angeschlossen ist, wobei der wenigstens eine Vorderkolben (19) dafür ausgelegt ist, die zweite Schwenkbewegung (f) des ersten und zweiten Vorsatzabschnitts (11, 12) zu bewirken.

5. Verschwenkbarer Mähvorsatz nach einem der vorstehenden Ansprüche, wobei die erste Schwenkbewegung (g) und die zweite Schwenkbewegung (f) ohne eine mechanische Entkopplung zwischen den bewegungsübertragenden Teilen und dem Mähvorsatz (10) auslösbar sind.

6. Verfahren zum Falten eines verschwänkbaren Mähvorsatzes (10) für eine landwirtschaftliche Maschine (30), wobei eine landwirtschaftliche Maschine (30) eine Maschinenlängsachse (A) aufweist, die parallel zum Boden (40) verläuft, wobei der Vorsatz einen ersten Vorsatzabschnitt (11) und einen zweiten Vorsatzabschnitt (12) aufweist, die jeweils Vorsatzabschnittlängsachsen (L) und ein Verbindungselement (17) haben, mit dem die Vorsatzabschnitte (11, 12) über entsprechende Seitengelenke (13, 14) verbunden sind, wobei das eine Verbindungselement (17) an der Vorderseite der landwirtschaftlichen Maschine (30) befestigbar ist,
wobei das Verfahren die Schritte aufweist:
- Durchführen erster Schwenkbewegungen (g) der Vorsatzabschnitte (11, 12) zum Schwenken der Vorsatzabschnitte aus einer Anfangsarbeitsposition in eine Zwischenposition, wobei die ersten Schwenkbewegungen (g) um die ersten Schwenkachsen (X) durchgeführt werden, die im Wesentlichen senkrecht zu der Richtung sind, welche die Längsachse (L) der Vorsatzabschnitte (11, 12) in der Anfangsarbeitsposition haben,
- Durchführen einer zweiten Schwenkbewegung (f) der Vorsatzabschnitte (11, 12) zum Schwenken der Vorsatzabschnitte aus ihrer Zwischenposition in eine Endposition, wobei die zweite Schwenkbewegung (f) um eine zweite Schwenkachse (Y) durchgeführt wird, die im Wesentlichen senkrecht zu den ersten Schwenkachsen (X) und im Wesentlichen senkrecht zu der Richtung ist, welche die Längsachsen (L) der Vorsatzabschnitte (11, 12) in der Zwischenposition haben,
wobei die erste Schwenkbewegung (g) und die zweite Schwenkbewegung (f) dafür ausgelegt sind, die Vorsatzabschnitte (11, 12) vor die landwirtschaftliche Maschine (30) zu bringen und zwar so, dass die Vorsatzabschnitte (11, 12) innerhalb einer querverlaufenden Abmessung der Landwirtschaftsmaschine (30) enthalten sind, und
wobei die erste Schwenkbewegung (g) und die zweite Schwenkbewegung (f) dafür ausgelegt sind, die Vorsatzabschnitte (11, 12) in eine Position zu bringen, in der ihre Längsachsen (L) im Wesentlichen parallel zu der Maschinenlängsachse (A) verlaufen.

## Revendications

1. Tête de coupe articulée pour des machines agricoles (30) ayant un axe longitudinal de machine (A) et des essieux de roues (R),
ledit organe de coupe (10) comprenant une première section d'organe de coupe (11) et une seconde section d'organe de coupe (12) ayant des axes longitudinaux de section d'organe de coupe respectifs (L),
chacune desdites première et seconde sections d'organe de coupe étant munie d'une charnière latérale (13, 14) respective, chacune desdites charnières latérales étant adaptée pour permettre un premier déplacement pivotant (g) de la section d'organe de coupe (11, 12) respective,
ledit organe de coupe (10) comprenant en outre au moins une charnière de raccordement (18) adaptée pour permettre un second déplacement pivotant (f) des sections d'organe de coupe (11, 12),
ledit premier déplacement pivotant (g) étant effectué autour de premiers axes de pivot (X) sensiblement parallèles l'un à l'autre, et ledit second déplacement pivotant (f) étant effectué autour d'un second axe de pivot (Y) sensiblement perpendiculaire auxdits premiers axes de pivot (X),
lesdits premiers axes de pivot (X) et ledit second axe de pivot (Y) étant sensiblement perpendiculaires à la direction qu'ont les axes longitudinaux (L) de chacune desdites sections d'organe de coupe (11, 12) au début dudit premier déplacement pivotant (g) et dudit second déplacement pivotant (f), respectivement
dans laquelle ledit organe de coupe (10) comprend en outre un élément de raccordement (17) auquel sont jointes lesdites sections d'organe de coupe (11, 12) au moyen desdites charnières latérales (13, 14), ledit un élément de raccordement (17) pouvant être attaché à l'avant de la machine agricole (30) au moyen de ladite au moins une charnière de raccordement (18),
dans laquelle ledit premier déplacement pivotant (g) et ledit second déplacement pivotant (f) sont adaptés pour agencer les sections d'organe de coupe (11, 12) à l'avant de la machine agricole (30) et de manière que lesdites sections d'organe de coupe (11, 12) soient contenues dans une dimension transversale de la machine agricole (30),
**caractérisée en ce que** ledit axe longitudinal de machine (A) est parallèle au sol (40) et ledit premier déplacement pivotant (g) et ledit second déplacement pivotant (f) sont adaptés pour agencer les sections d'organe de coupe (11, 12) dans une position dans laquelle leurs axes longitudinaux (L) sont sensiblement parallèles audit axe longitudinal de machine (A).

2. Tête de coupe articulée selon la revendication 1, dans laquelle lesdits premiers axes de pivot (X) sont sensiblement parallèles à l'axe longitudinal (A) de la machine agricole (30) et dans laquelle ledit second axe de pivot (Y) est sensiblement parallèle aux essieux de roues (R) de la machine agricole (30).

3. Tête de coupe articulée selon l'une quelconque des revendications précédentes, dans laquelle ledit premier déplacement pivotant (g) et ledit second déplacement pivotant (f) peuvent être actionnés au moyen d'organes d'actionnement (15, 16, 19) commandés par la machine agricole (30).

4. Tête de coupe articulée selon la revendication 3, dans laquelle lesdits organes d'actionnement comprennent :
- un premier piston latéral (15), raccordé entre la première section d'organe de coupe (11) et l'élément de raccordement (17) et configuré pour actionner le premier déplacement pivotant (g) de la première section d'organe de coupe (11) ;
- un second piston latéral (16), raccordé entre la seconde section d'organe de coupe (12) et l'élément de raccordement (17) et configuré pour actionner le premier déplacement pivotant (g) de la seconde section d'organe de coupe (12) ;
- au moins un piston avant (19), raccordé entre ledit un élément de raccordement (17) et ladite machine agricole (30), ledit au moins un piston avant (19) étant configuré pour actionner le second déplacement pivotant (f) des première et seconde sections d'organe de coupe (11, 12) .

5. Tête de coupe articulée selon l'une quelconque des revendications précédentes, dans laquelle ledit premier déplacement pivotant (g) et ledit second déplacement pivotant (f) peuvent être actionnés sans découplage mécanique entre des organes de transmission de mouvement et la tête de coupe (10).

6. Procédé de repli d'une tête de coupe articulée (10) pour une machine agricole (30), ladite machine agricole (30) ayant un axe longitudinal de machine (A) qui est parallèle au sol (40), ledit organe de coupe comprenant une première section d'organe de coupe (11) et une seconde section d'organe de coupe (12) ayant des axes longitudinaux de section d'organe de coupe respectifs (L) et un élément de raccordement (17) auquel lesdites sections d'organe de coupe (11, 12) sont jointes au moyen de charnières latérales (13, 14) respectives, ledit un élément de raccordement (17) pouvant être attaché à l'avant de la machine agricole (30),
ledit procédé comprenant les étapes consistant à :
- fournir des premiers déplacements pivotants (g) des sections d'organe de coupe (11, 12) pour faire pivoter les sections d'organe de coupe d'une position de travail de départ à une position intermédiaire, lesdits premiers déplacements pivotants (g) étant effectués autour des premiers axes de pivot (X) sensiblement perpendiculairement à la direction qu'ont les axes longitudinaux (L) des sections d'organe de coupe (11, 12) dans la position de travail de départ ;
- fournir un second déplacement pivotant (f) aux sections d'organe de coupe (11, 12) pour faire pivoter les sections d'organe de coupe de leur position intermédiaire à une position finale, ledit second déplacement pivotant (f) étant effectué autour d'un second axe de pivot (Y) sensiblement perpendiculairement aux premiers axes de pivot (X) et sensiblement perpendiculairement à la direction qu'ont les axes longitudinaux (L) des sections d'organe de coupe (11, 12) dans la position intermédiaire,
dans lequel ledit premier déplacement pivotant (g) et ledit second déplacement pivotant (f) sont adaptés pour agencer les sections d'organe de coupe (11, 12) à l'avant de la machine agricole (30) et de manière que lesdites sections d'organe de coupe (11, 12) soient contenues dans une dimension transversale de la machine agricole (30), et
dans lequel ledit premier déplacement pivotant (g) et ledit second déplacement pivotant (f) sont adaptés pour agencer les sections d'organe de coupe (11, 12) dans une position dans laquelle leurs axes longitudinaux (L) sont sensiblement parallèles audit axe longitudinal de machine (A).
